# EUROPÄISCHE PATENTSCHRIFT

(11) **EP 1 243 959 B1**
(45) Veröffentlichungstag und Bekanntmachung des Hinweises auf die Patenterteilung: **18.01.2006**
(21) Anmeldenummer: 02006705.4
(22) Anmeldetag: 22.03.2002
(51) Int. Cl.: G02C 5/22

(54) **Scharnierverbindung**
Hinge connection
Connection à charnière

(30) Priorität: 22.03.2001 DE 10114272
(43) Veröffentlichungstag der Anmeldung: 25.09.2002
(73) Patentinhaber: Rodenstock GmbH, 80469 München (DE)
(72) Erfinder: Fischer, Ekkehart, 81827 München (DE)

(56) Entgegenhaltungen:
- EP-A- 0 607 114
- WO-A-94/11774
- DE-A- 3 404 511
- FR-A- 954 467
- FR-A- 2 703 477
- US-A- 4 780 928
- US-A- 4 978 209

## Beschreibung

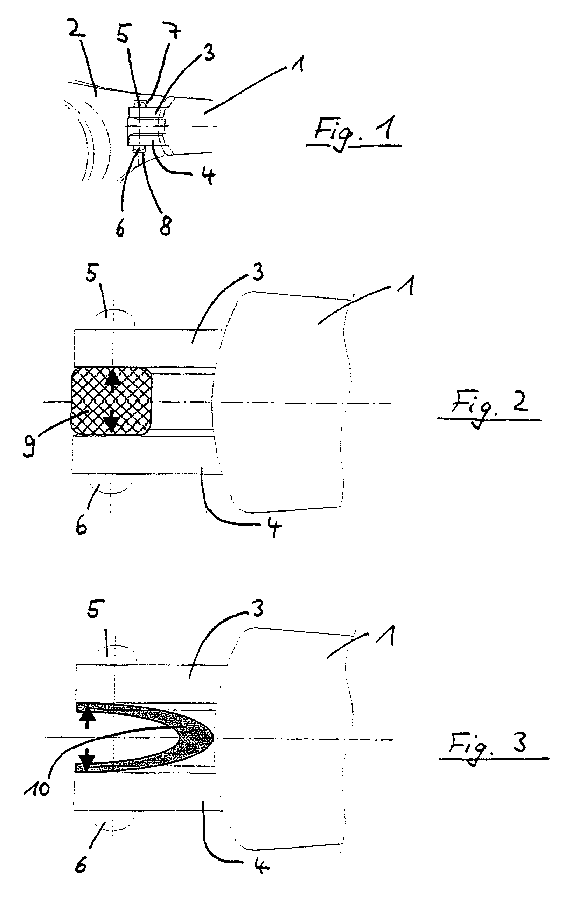

Die Erfindung betrifft eine Scharnierverbindung für eine Brillenfassung gemäß Oberbegriff des Anspruchs 1. Der Bügel und das Mittelteil der Brillenfassung sind mittels einer Schnappverbindung gelenkig verbunden.
Eine Scharnierverbindung der im Oberbegriff des Anspruchs 1 geschilderten Art ist in der FR 954 467 A beschrieben. Das mit dem Mittelteil einer Brille zu verbindende Ende eines Brillenbügels ist gabelförmig ausgebildet Zum Montieren des Brillenbügels werden die Brillenbügelteile 4a und 4b entweder auseinandergezogen (Fig.1) oder zusammengedrückt (Fig. 5). Da die Brillenbügelteile 4a und 4b elastisch sind, schnappen diese Teile mittels Zapfen 5a, 5b bzw. 8a, 8b in eine entsprechende Aufnahme im Mittelteil der Brille ein.
Scharniere gemäß Oberbegriff des Anspruchs 1 werden besonders bei Sportbrillen eingesetzt, haben aber den Nachteil, dass ein anfangs vorhandener Schamiergang nach kurzer Zeit im Tragegebrauch verloren geht.

Der Erfindung liegt die Aufgabe zugrunde, eine Scharnierverbindung der eingangs geschilderten Art anzugeben, bei der der Schamiergang über lange Zeit erhalten bleibt.

Diese Aufgabe wird durch das im kennzeichnenden Teil des Anspruchs 1 angegebene Merkmal gelöst Die Erfindung beruht darauf, die Spannung und damit die Reibung im Scharnier durch ein zusätzliches Federelement zwischen den Schnapphaken dauerhaft aufrecht zu erhalten und damit einen entsprechend dauerhaften Scharniergang zu erzielen.

Vorteilhafte Ausgestaltungen der Erfindung sind in den Unteransprüchen angegeben.

Beispiele für erfindungsgemäße Scharnierverbindungen sind in den Figuren dargestellt Übereinstimmende Teile sind in den Figuren mit identischen Bezugszeichen versehen.

In Figur 1 ist ein herkömmliches Scharnier für Kunststoffbrillenfassungen dargestellt in der Figur sind der Endbereich eines Brillenbügels 1, ein Teilbereich eines Mittelteils 2 und ein die beiden Teile verbindendes Scharnier dargestellt. Das Scharnier besteht aus zwei Halteelementen 3 und 4. Die Halteelemente 3, 4 haben die Form ebener Scheiben. Die Scheibenebenen sind parallel zueinander und erstrecken sich in der Schwenkebene des am Mittelteil 2 befestigten Bügels 1. Jedes Halteelement 3, 4 trägt einen Vorsprung 5,6. Diese befinden sich auf den einander nicht zugewandten Seiten der Halteelemente 3, 4. Die Halteelemente 3, 4 sind elastisch. Dadurch kann ein Bügel auf einfache Weise am Mittelteil montiert werden, indem der Bügel in das Mittelteil geschoben wird, bis die Vorsprünge in entsprechende Aufnahmeelemente 7, 8 im Mittelteil 2 einrasten. Die Aufnahmeelemente 7, 8 einerseits und die Vorsprünge 5, 6 sind koaxial zueinander angeordnet, so dass ein Brillenbügel gegenüber dem Mittelteil zwischen einer Bügelaufschlagstellung und einer Bügeleinschlagstellung verschwenkbar ist Die Vorsprünge 5, 6 und Aufnahmeelemente 7, 8 sind in ihrer Form so aufeinander abgestimmt, dass ein Bügel gegenüber dem Mittelteil möglichst nur in der Schwenkebene bewegt werden kann. In den in den Figuren dargestellten Beispielen haben die Vorsprünge die Form von Halbkugeln, während die Aufnahmeelemente die Form eines Kreiszylinders haben. Die Vorsprünge greifen in Aufnahmeelemente 7 bzw. 8 im Mittelteil ein. Halteelement und zugehöriger Vorsprung werden als Schnapphaken bezeichnet.

In Figur 2 ist eine Ausführungsform der beanspruchten Scharnierverbindung dargestellt Zwischen den beiden Halteelementen ist ein Elastomer-Puffer 9 angeordnet, der unter Vorspannung an den Halteelementen anliegt Der Puffer besteht aus einem thermoplastischen Elastomer aus der Gruppe der Styrol-Block-Copolymere.

In Figur 3 ist eine Ausführungsform der beanspruchten Scharnierverbindung dargestellt Zwischen den beiden Halteelementen ist ein Federelement aus Metall 10 angeordnet Der Elastomer-Puffer 9 bzw. das Federelement aus Metall 10 liegen an den Halteelementen 3, 4 insbesondere unter Vorspannung - an. Durch diese Federelemente wird die Spannung und damit die Reibung im Scharnier dauerhaft aufrechterhalten. Auf diese Weise wird ein dauerhafter Scharniergang erzielt.

Selbstverständlich sind auch andere Arten von Federelementen einsetzbar.

## Patentansprüche

1. Scharnierverbindung zwischen dem Bügel (1) und dem Mittelteil (2) einer Brillenfassung, bestehend aus zwei Schnapphaken am Ende des Bügels (1) und zwei entsprechenden Aufnahmeelementen (7,8) im Mittelteil (2) wobei jeder Schnapphaken aus einem am Bügelende befestigten, elastischen, sich in der Schwenkebene des am Mittelteil (2) befestigten Bügels (1) erstreckenden Halteelement (3,4) mit einem Vorsprung (5,6) besteht, wobei die Halteelemente (3,4) mit Abstand zueinander angeordnet sind und mittels der Vorsprünge (5,6) in die entsprechenden Aufnahmeelemente (7,8) im Mittelteil (2) einrastbar sind, und wobei die Vorsprünge (5,6) und Aufnahmeelemente (7,8) entlang einer Achse angeordnet sind, um die der Bügel (1) zwischen einer Einschlag- und einer Aufschlagstellung schwenkbar ist, **dadurch gekennzeichnet, dass** zwischen den Halteelementen (3,4) ein an diesen anliegendes Federelement (9,10) angeordnet ist.

2. Scharnierverbindung nach Anspruch 1, **dadurch gekennzeichnet, dass** das Federelement (9,10) unter Vorspannung an den Halteelementen (3,4) anliegt.

3. Scharnierverbindung nach Anspruch 1 oder 2, **dadurch gekennzeichnet, dass** das Federelement (9,10) aus einem thermoplastischen Elastomer besteht.

4. Scharnierverbindung nach Anspruch 3, **dadurch gekennzeichnet, dass** das thermoplastische Elastomer ein Styrol-Block-Copolymer ist.

5. Scharnierverbindung nach Anspruch 1 oder 2, **dadurch gekennzeichnet, dass** das Federelement eine Metallfeder (10) ist.

6. Scharnierverbindung nach einem der Anspruch 1 bis 5, **dadurch gekennzeichnet, dass** die Vorsprünge (5,6) kreiszylindrisch, halbkugelförmig oder kegelstumpfförmig sind.

## Claims

1. A hinge connection between the side (1) and the middle part (2) of a spectacle frame, consisting of two snap hooks at the end of the side (1) and two corresponding receiving elements (7, 8) in the middle part (2), wherein each snap hook consists of an elastic retaining element (3, 4) fixed on the end of the side, extending in the pivoting plane of the side (1) fixed on the middle part (2) and with a projection (5, 6), wherein the retaining elements (3, 4) are spaced from one another and by means of the projections can be snapped into the corresponding receiving elements (7, 8) in the middle part (2) and wherein the projections (5, 6) and the receiving elements (7, 8) are arranged along an axis about which the side (1) can be turned between a folded out and a folded in position, **characterized in that** a spring element (9, 10) is arranged between the retaining elements (3, 4) and bears on these.

2. A hinge connection according to claim 1, **characterized in that** the spring element (9, 10) bears under pre-stress on the retaining elements (3, 4).

3. A hinge connection according to claim 1 or 2, **characterized in that** the spring element (9, 10) consists of a thermoplastic elastomer.

4. A hinge connection according to claim 3, **characterized in that** the thermoplastic elastomer is a styrene block copolymer.

5. A hinge connection according to claim 1 or 2, **characterized in that** the spring element is a metal spring (10).

6. A hinge connection according to any of claims 1 to 5, **characterized in that** the projections (5, 6) are of circular cylindrical, hemispherical or frustoconical form.

## Revendications

1. Connexion à charnière entre l'étrier (1) et la partie centrale (2) d'une monture de lunettes, se composant de deux crochets à déclic à l'extrémité de l'étrier (1) et deux éléments de réception correspondants (7, 8) dans la partie centrale (2) sachant que chaque crochet à déclic se compose d'un élément de support (3, 4) élastique fixé à l'extrémité de l'étrier, s'étendant sur le plan orientable de l'étrier (1) fixé à la partie centrale (2), avec une partie en saillie (5, 6), sachant que les éléments de support (3, 4) sont disposés écartés les uns des autres et peuvent être encliquetés dans la partie centrale (2) au moyen des parties en saillie (5, 6) dans les éléments de réception correspondants (7, 8) et sachant que les parties en saillie (5, 6) et les éléments de réception (7, 8) sont disposés le long d'un axe, autour duquel l'étrier (1) est orientable entre une position de choc et une position d'enfoncement, **caractérisée en ce qu'**entre les éléments de support se trouve un élément à ressort (9, 10).

2. Connexion à charnière selon la revendication 1, **caractérisée en ce que** l'élément à ressort (9, 10) est placé sous pré-tension sur les éléments de support (3, 4) .

3. Connexion à charnière selon la revendication 1 ou 2, **caractérisée en ce que** l'élément à ressort (9, 10) se compose d'un élastomère thermoplastique.

4. Connexion selon la revendication 3, **caractérisée en ce que** l'élastomère thermoplastique est un styrolène-copolymère séquence.

5. Connexion à charnière selon la revendication 1 ou 2, **caractérisée en ce que** l'élément à ressort est un ressort métallique (10).

6. Connexion à charnière selon l'une des revendications 1 à 5, **caractérisée en ce que** les parties en saillie (5, 6) sont cylindriques circulaires, en forme de demi-sphères ou de forme tronconique.
